# EUROPEAN PATENT SPECIFICATION

(11) **EP 1 298 301 B1**
(45) Date of publication and mention of the grant of the patent: **12.04.2006**
(21) Application number: 01122986.1
(22) Date of filing: 26.09.2001
(51) Int. Cl.: F02D 41/02, F02D 41/08

(54) **Method for controlling the starting of an internal combustion engine**
Methode für die Steuerung des Anlassens eines Verbrennungsmotors
Méthode pour contrôler le démarrage d'un moteur à combustion interne

(43) Date of publication of application: 02.04.2003
(73) Proprietor: Ford Global Technologies, LLC, Dearborn, MI 48126 (US)
(72) Inventor: Moraal, Paul Eduard, 6291 VP Vaals (BE); Kuenstler, Johannes, 52064 Aachen (DE)
(74) Representative: Drömer, Hans-Carsten

(56) References cited:
- EP-A- 1 035 313
- EP-A- 1 074 702
- DE-A- 10 001 992
- US-A- 5 265 418

## Description

The present invention relates to a method for controlling the starting of an internal combustion engine comprising an exhaust aftertreatment device that requires a minimal threshold temperature for proper operation. Moreover, the invention relates to a system comprising an internal combustion engine, an exhaust gas aftertreatment device, an electrical generator, and an engine controller.

During the last few years regulations for the protection of the environment have become increasingly stringent. This makes it for internal combustion engines more and more difficult to meet legal requirements, though exhaust aftertreatment devices like three-way catalysts, conventional oxidising catalysts and particulate filters are standard today. Especially diesel engines are problematic due to high emissions of carbon monoxide CO and hydrocarbons HC.

In the DE 100 01 992 A1 the temporary increase of exhaust gas temperature above a normal level for the regeneration of exhaust gas aftertreatment devices is considered. Said increase of exhaust gas temperature is achieved by applying additional loads to the combustion engine, particularly electrical consumers. Similarly, EP 1 074 702 A1 relates to the increase of exhaust gas temperature above its normal level for the regeneration of an aftertreatment device by the application of additional electrical loads, particularly a glow plug.

The document EP 1 035 313 A2 is also concerned with the normal operation of an internal combustion engine. In order to prevent the decrease of exhaust gas temperature during periods of low load or idling, it is proposed to throttle the engine temporarily.

In the US 5 265 418, a method to control the starting of an internal combustion engine with an exhaust aftertreatment device that requires a minimal operation temperature is considered. According to that method, the temperature of the exhaust gases is increased more rapidly after starting of the engine by coupling parasitic electric loads to the engine.

It is an object of the present invention to provide an improved method for the control of an internal combustion engine with an aftertreatment device and with an exhaust gas recirculation, the method producing less overall emissions during operation.

According to a first aspect of the invention, a method for controlling the starting of an internal combustion engine is provided, the engine comprising an exhaust aftertreatment device that requires a minimal threshold temperature for proper operation. During a certain period of time after engine start the following steps are performed:
a) increasing the electrical load of an electrical generator that is driven by the engine; and
b) throttling the air intake to reduce the intake manifold pressure to a target pressure while the exhaust gas recirculation is reduced or stopped.

The proposed method achieves a considerable reduction in emissions of the internal combustion engine by focusing on the starting period of the engine. During warm-up of the engine, the aftertreatment device is still cold and therefore not in its optimal working range or even not operative at all. The exhaust gas is therefore released into the atmosphere essentially untreated. This leads to high emissions during engine start, which represent a considerable fraction of the total emissions of the internal combustion engine.

The method according to the present invention addresses these problems and provides a faster engine warm-up by performing steps a) and b). During step a), additional power is consumed by the loads that are coupled to the generator. This leads to a higher load for the engine, too, which in turn results in a faster warming of the exhaust gases. Thus, the period of time during which the aftertreatment device is not operative is reduced. Step b) contributes further to this effect because throttling air flow through the engine means that less mass has to be heated with a given amount of heat, yielding higher temperatures. Moreover, efficiency of the engine is reduced and pumping losses are increased, leading to a higher heat production.

The electrical loads that are coupled to the generator in step a) preferably comprise electrical consumers that are present in a vehicle anyway, e.g. at least one glow plug of the engine or an electrical heater of the cabin or the windshield. The advantage of said consumers is that their short-term operation as additional load will not be noticed by the driver.

According to the invention, exhaust gas recirculation is reduced or stopped during step b). Due to the reduction of the intake manifold pressure, the pressure difference between intake manifold and exhaust manifold increases, which may lead to an excessive exhaust gas recirculation. This excessive recirculation is prevented if the exhaust gas recirculation is reduced or stopped, e.g. by closing respective valves.

If a turbine with variable geometry is present in the engine, it may be operated open-loop only during step b). This prevents a turbocharger overspeed which might result from the throttling of the intake and the attempt to stabilise a certain intake manifold pressure.

Preferably it is first tried to reach the desired exhaust temperature by step a) alone. If this does not succeed, however, step b) will be carried out additionally. The decision to include step b) or not will preferably be taken in dependence on the exhaust temperature behind the aftertreatment device. Thus, step b) will only be carried out if exhaust gas temperature behind the aftertreatment device is below a given threshold temperature.

The goal of the method according to the present invention is to reach as fast as possible a temperature of the exhaust gas that is above the threshold temperature for proper operation of the aftertreatment device. Therefore, steps a) and b) are preferably stopped if exhaust gas temperature has reached this threshold, thus limiting the time spent within the exceptional engine mode of steps a) and b).

In order to avoid undesirable implications of steps a) and b), these steps are preferably only carried out if the temperature of the engine at start is within a certain temperature interval, i.e. not too high and not too low.

The invention also comprises a system with an internal combustion engine, an exhaust gas aftertreatment device, an electrical generator, and an engine controller. In this system, the controller is adapted to execute one of the methods described above. Such a system has the advantage to warm up quickly, thus minimising the time of essentially unfiltered emissions due to an aftertreatment device that has not reached its operating temperature yet.

Preferably, the combustion engine comprises a diesel engine, and/or the aftertreatment device comprises an oxidising catalyst. Presently, diesel engines emit most of the CO and HC emissions during engine and catalyst warm-up. The oxidising catalyst does not convert the CO and HC leaving the engine until it has reached a temperature of about 200°C. Therefore, the advantages of the present invention are most prominent in conjunction with such a diesel engine and/or an oxidising catalyst. Here, a considerable reduction in total emissions over several drive cycles can be achieved.

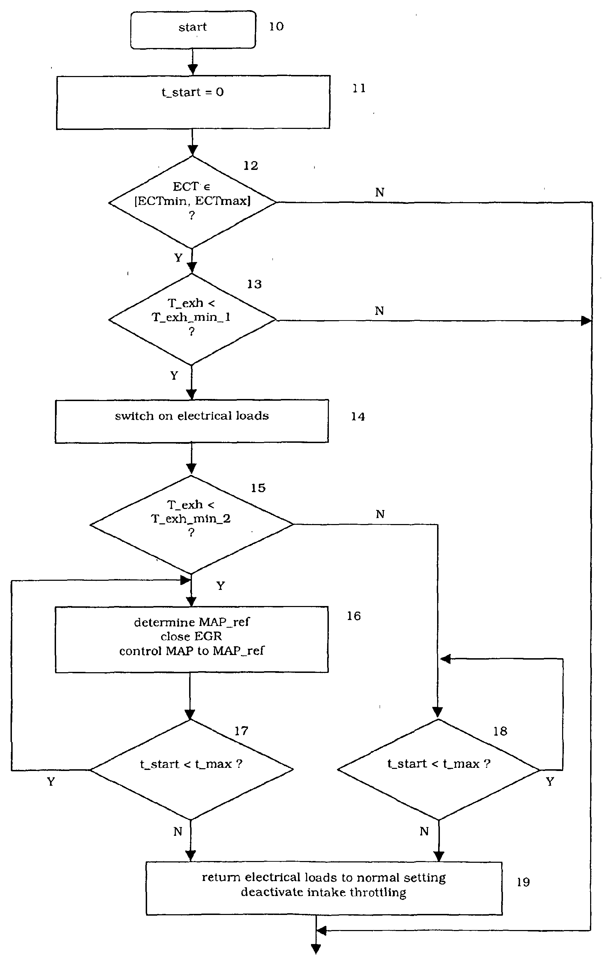

The invention will now be described by way of example in connection with the accompanying drawing.

The only figure shows a flowchart of a method to control the starting of an internal combustion engine according to the principles of the present invention.

The goal of the inventive method is to increase the exhaust gas temperature after engine start quickly to improve catalyst performance. The method will be described with reference to a preferred implementation that comprises a diesel engine equipped with an exhaust gas recirculation (EGR) system, an intake air throttle, an oxidising catalyst, and a temperature sensor downstream of that catalyst. Moreover, the engine comprises an engine control unit (ECU) which is programmed with the necessary software in order to execute the inventive algorithm. The algorithm is executed as part of the overall engine control strategy at a fixed sampling rate, e.g. once every 16 ms.

After start of that algorithm in block 10, the ECU initialises a timer t_start in block 11.

If the engine coolant temperature ECT is not within a range [ECT_min, ECT_max] that can be calibrated, the algorithm is terminated in block 12 in order to minimise impact on drivability and performance.

If the engine coolant temperature ECT is within said range, the algorithm checks in block 13 the catalyst outlet temperature T_exh. If T_exh is below a first predetermined threshold T_exh_min_1, for example 200°C, electrical loads are switched on in block 14 to put a higher load on the engine and thus increase engine out exhaust gas temperature. Preferably only those loads are switched on that are not noticeable by the driver, such as windshield heater or glow plugs.

Once the exhaust gas temperature exceeds the first threshold T_exh_min_1, the electrical loads are switched back to their default or driver selected values.

Next, the algorithm checks in block 15 whether the catalyst temperature T_exh is below a second calibratible threshold T_exh_min_2, for example 150°C. If so, the additional electrical loads will not raise the exhaust gas temperature sufficiently, and the intake throttling feature is activated in block 16. Basically, the intake throttle is used to lower the intake manifold pressure (MAP) to a target pressure, MAP_ref, which is a function of speed and load. During this throttling, the EGR valve is closed, and the variable geometry turbine (VGT) is operated in open loop only.

The algorithm is terminated in block 17 or 18 after a calibratible period of time t_max because the algorithm may temporarily lead to higher feed gas emissions and therefore its operation should be limited to a fixed duration.

In an alternative implementation without exhaust gas temperature sensor, the checks on T_exh_min_1 and T_exh_min_2 of blocks 13 and 15 are not performed, and the algorithm is executed until the timer t_start has reached the maximum value t_max.

## Claims

1. A method for controlling the starting of an internal combustion engine comprising an exhaust aftertreatment device that requires a minimal threshold temperature for proper operation, wherein during a certain time period after engine start the following steps are performed:
a) increasing the electrical load of an electrical generator that is driven by the engine;
b) throttling the air intake to reduce the intake manifold pressure to a target pressure while the exhaust gas recirculation is reduced or stopped.

2. The method according to claim 1, wherein the electrical load of the generator comprises at least one glow plug of the engine.

3. The method according to claim 1 or 2, wherein the electrical load of the generator comprises at least one electrical heater.

4. The method according to one of the claims 1 to 3, wherein a turbine with variable geometry is operated open-loop during step b).

5. The method according to one of the claims 1 to 4, wherein step b) is only carried out if exhaust gas temperature behind the aftertreatment device is below a given threshold temperature.

6. The method according to one of the claims 1 to 5, wherein steps a) and b) are stopped if exhaust gas temperature behind the aftertreatment device is above said threshold temperature for proper operation of the aftertreatment device.

7. The method according to one of the claims 1 to 6, wherein steps a) and b) are only carried out if the temperature of the engine is within a certain temperature interval.

8. A system comprising an internal combustion engine, an exhaust gas aftertreatment device, an electrical generator, and an engine controller, the controller being adapted to execute a method according to one of the claims 1 to 7.

9. The system according to claim 8, wherein the internal combustion engine comprises a diesel engine.

10. The system according to claim 8 or 9, wherein the aftertreatment device comprises an oxidising catalyst.

## Patentansprüche

1. Verfahren für die Steuerung des Anlassens eines Verbrennungsmotors mit einer Abgasnachbehandlungsvorrichtung, die eine minimale Schwellwerttemperatur für den ordnungsgemäßen Betrieb erfordert, wobei während einer bestimmten Zeitdauer nach dem Anlassen des Motors die folgenden Schritte durchgeführt werden:
a) Erhöhen der elektrischen Last eines vom Motor angetriebenen elektrischen Generators,
b) Drosseln der Luftansaugung zur Verringerung des Ansaugkrümmerdrucks auf einen Solldruck, während die Abgasrückführung verringert oder angehalten wird.

2. Verfahren nach Anspruch 1, bei dem die elektrische Last des Generators mindestens eine Glühkerze des Motors umfasst.

3. Verfahren nach Anspruch 1 oder 2, bei dem die elektrische Last des Generators mindestens eine elektrische Heizvorrichtung umfasst.

4. Verfahren nach einem der Ansprüche 1 bis 3, bei dem eine Turbine mit variabler Geometrie während des Schrittes b) ohne Rückkopplung betrieben wird.

5. Verfahren nach einem der Ansprüche 1 bis 4, bei dem Schritt b) nur durchgeführt wird, wenn die Abgastemperatur hinter der Nachbehandlungsvorrichtung unter einem gegebenen Schwellwert liegt.

6. Verfahren nach einem der Ansprüche 1 bis 5, bei dem die Schritte a) und b) angehalten werden, wenn sich die Abgastemperatur hinter der Nachbehandlungsvorrichtung über der Schwellwerttemperatur für ordnungsgemäßen Betrieb der Nachbehandlungsvorrichtung befindet.

7. Verfahren nach einem der Ansprüche 1 bis 6, bei dem die Schritte a) und b) nur durchgeführt werden, wenn sich die Temperatur des Motors in einem bestimmten Temperaturbereich befindet.

8. System mit einem Verbrennungsmotor, einer Abgasnachbehandlungsvorrichtung, einem elektrischen Generator und einer Motorsteuerung, wobei die Steuerung dazu ausgeführt ist, ein Verfahren nach einem der Ansprüche 1 bis 7 auszuführen.

9. System nach Anspruch 8, bei dem der Verbrennungsmotor einen Dieselmotor umfasst.

10. System nach Anspruch 8 oder 9, bei dem die Nachbehandlungsvorrichtung einen Oxidationskatalysator umfasst.

## Revendications

1. Procédé pour commander le démarrage d'un moteur à combustion interne qui comprend un dispositif de post-traitement des gaz d'échappement qui nécessite une température de seuil minimale pour fonctionner de manière appropriée, les étapes qui suivent étant effectuées pendant une certaine durée après le démarrage du moteur :
a) augmenter la charge électrique d'un générateur électrique qui est entraîné par le moteur et
b) diminuer l'admission d'air pour réduire la pression du collecteur d'admission à une pression cible pendant que la recirculation des gaz d'échappement est réduite ou arrêtée.

2. Procédé selon la revendication 1, dans lequel la charge électrique du générateur comprend au moins une bougie de préchauffage du moteur.

3. Procédé selon les revendications 1 ou 2, dans lequel la charge électrique du générateur comprend au moins un dispositif de chauffage électrique.

4. Procédé selon l'une quelconque des revendications 1 à 3, dans lequel une turbine à géométrie variable est actionnée en boucle ouverte pendant l'étape b).

5. Procédé selon l'une quelconque des revendications 1 à 4, dans lequel l'étape b) n'est effectuée que si la température des gaz d'échappement en aval du dispositif de post-traitement est inférieure à une température de seuil donnée.

6. Procédé selon l'une quelconque des revendications 1 à 5, dans lequel les étapes a) et b) sont arrêtées si la température des gaz d'échappement en aval du dispositif de post-traitement est supérieure à ladite température de seuil nécessaire pour que le dispositif de post-traitement fonctionne de manière appropriée.

7. Procédé selon l'une quelconque des revendications 1 à 6, dans lequel les étapes a) et b) ne sont effectuées que si la température du moteur est comprise dans un certain intervalle de température.

8. Système qui comprend un moteur à combustion interne, un dispositif de post-traitement des gaz d'échappement, un générateur électrique et un dispositif de commande de moteur, le dispositif de commande étant adapté pour mettre en oeuvre un procédé selon l'une quelconque des revendications 1 à 7.

9. Système selon la revendication 8, dans lequel le moteur à combustion interne est un moteur diesel.

10. Système selon les revendications 8 ou 9, dans lequel le dispositif de post-traitement est un catalyseur d'oxydation.
